# EUROPÄISCHE PATENTANMELDUNG

(11) **EP 0 733 403 A1**
(43) Veröffentlichungstag der Anmeldung: **25.09.1996**
(21) Anmeldenummer: 96103777.7
(22) Anmeldetag: 11.03.1996
(51) Int. Cl.: B01J 27/16, C01B 25/36, C08F 4/02, C04B 14/36, C09K 3/00

(54) **Verfahren zur Herstellung von Formteilen aus Addukten von Aminen an saure Metallsalze**

(30) Priorität: 22.03.1995 DE 19510296
(71) Anmelder: BAYER AG, 51368 Leverkusen (DE)
(72) Erfinder: von Bonin, Wulf, Dr., 51519 Odenthal (DE); Jabs, Gert, Dr., 51519 Odenthal (DE)

(57) **Zusammenfassung**

Für die verschiedensten Zwecke verwendbare Formteile werden hergestellt, indem man
- zunächst eine wäßrige Lösung von Aminaddukten von sauren Metallsalzen herstellt,
- diese Lösung solange auf Temperaturen unter 250°C erhitzt, bis das entfernbare Wasser verdampft ist,
- den verbleibenden Rückstand zu Teilchen mit mittleren Durchmessern zwischen 0,05 und 25 mm zerkleinert,
- diese Teilchen für eine Zeitdauer von 0,3 Sekunden bis 5 Minuten einer Temperatur von 180 bis 350°C aussetzt, wobei die Teilchen aufgetrieben werden und Hohlperlen entstehen,
- diese Hohlperlen in eine Form einbringt und
- dort auf Temperaturen von 350 bis 1200°C erhitzt, wobei die Teilchen expandieren und miteinander thermisch verschweißen.

## Beschreibung

Die vorliegende Erfindung betrifft ein besonders vorteilhaftes Verfahren zur Herstellung von Formteilen unter Verwendung von Addukten von Aminen an saure Metallsalze. Die Formteile können für die verschiedensten Zwecke verwendet werden.

Es ist bereits bekannt, überwiegend anorganische Formteile aus silikatischen Materialien herzustellen, indem man z.B. Schaumglaspartikel in Formen miteinander verschmilzt oder Blähtonkugeln in Formen zusammensintert.

Nachteilig bei solchen Formteilen ist, daß Glasschäume eine relativ niedrige Erweichungstemperatur von ca. 600°C aufweisen und Blähtone relativ hohe Herstellungstemperaturen von über 800°C benötigen, sowie relativ schwere Formteile mit Raumgewichten von über 250 g/l ergeben. Beiden Arten von Formteilen haftet der Nachteil an, daß nach der Herstellung beim Abkühlen eine ausgeprägte Tendenz zur Ausbildung von Thermospannungen und Rissen auftritt.

Ein eigener älterer, nicht vorveröffentlichter Vorschlag betreffend Hohlperlen und daraus hergestellte Formkörper entsprechend der deutschen Patentanmeldung P 43 43 196.8 ist von der vorliegenden Erfindung abgegrenzt.

Es wurde nun ein Verfahren zur Herstellung von Formteilen gefunden, das dadurch gekennzeichnet ist, daß man
- zunächst eine wäßrige Lösung von Aminaddukten von sauren Metallsalzen herstellt,
- diese Lösung solange auf Temperaturen unter 250°C erhitzt, bis das entfernbare Wasser verdampft ist,
- den verbleibenden Rückstand zu Teilchen mit mittleren Durchmessern zwischen 0,05 und 25 mm zerkleinert,
- diese Teilchen für eine Zeitdauer von 0,3 Sekunden bis 5 Minuten einer Temperatur von 180 bis 350°C aussetzt, wobei die Teilchen aufgetrieben werden und Hohlperlen entstehen,
- diese Hohlperlen in eine Form einbringt und
- dort auf Temperaturen von 350 bis 1200°C erhitzt, wobei die Teilchen expandieren und miteinander thermisch verschweißen.

Dieses Verfahren ergibt häufig schon bei Temperaturen unter 500 bis 600°C leichte, schaumartige Formteile, die erst über 1000°C erweichen, gewünschtenfalls Raumgewichte von deutlich unter 200 g/l und nur eine geringe Tendenz zur Bildung von Thermospannungen und Rissen aufweisen.

Ausgangsmaterial für die erfindungsgemäße Herstellung von Formteilen sind Addukte von Aminen an saure Metallsalze. Bei den sauren Metallsalzen kann es sich z.B. um saure Sulfate, Phosphate und/oder Borate von Alkali- und/oder Erdalkalimetallen und/oder von Aluminium, Eisen und/oder Zink handeln. Bevorzugt sind saure o-Phosphate und/oder saure o-Borate von Natrium, Kalium und/oder Aluminium, insbesondere von Aluminium. Solche sauren Metallsalze kann man z.B. durch die Umsetzung der entsprechenden Metallhydroxide und/oder analog reagierender Metalloxide, Metallcarbonate und/oder Metallacetate mit mehrbasischen Säuren, deren Hydratisierungsprodukten und/oder den entsprechenden Oxiden erhalten.

Bei den Aminen kann es sich beispielsweise um primäre, sekundäre und/oder tertiäre, aliphatische, araliphatische und/oder aromatische Amine und/oder Polyamine sowie um Ammoniak und/oder Anlagerungsprodukte von Alkylenoxiden an Ammoniak handeln. Bevorzugt sind Ammoniak, Ethylendiamin, Propylendiamin, Alkanolamine, Polyalkylenpolyamine und/oder Ethoxylierungs- und/oder Propoxylierungsprodukte des Ammoniaks. Besonders bevorzugt ist Monoethanolamin.

Die Addukte von Aminen an saure Metallsalze gelangen vorzugsweise in Form von über 50, besonders bevorzugt 50 bis 85 Gew.-%igen wäßrigen Lösungen zum Einsatz.

Die quantitative Zusammensetzung besonders geeigneter Addukte von Aminen und saure Metallsalzen kann z.B. der folgenden summarischen Formel (I) entsprechen:

Al₁₋₃B₀₋₉P₃₋₇N₄₋₁₂M₀₋₉ · xH₂O (I),

wobei
- Al: für eingesetztes Aluminiumhydroxid,
- B: für eingesetzte o-Borsäure,
- P: für eingesetzte o-Phosphorsäure,
- N: für eingesetztes Amin, insbesonders Monoethanolamin,
- M: für eingesetztes Alkalimetallhydroxid und
- xH₂O: das im anorganischen/organischen Komplex gebunden vorhandene Wasser bedeutet und x für 0 oder eine ganze Zahl von 1 bis 90 steht und
die Indices Molzahlen angeben.

Ganz besonders bevorzugte Addukte von Aminen an saure Metallsalze entsprechen der summarischen Formel (II)

Al₂₋₃B₃₋₉P_{5,5-6,5}N₆₋₉M₀₋₃ · xH₂O (II),

wobei
die verwendeten Symbole die o.a. Bedeutung haben und x für 0 oder eine ganze Zahl von 1 bis 36 steht.

Geeignete Addukte von Aminen an saure Metallsalze können z.B. hergestellt werden, indem man bei z.B. 60 bis 100°C, gegebenenfalls unter Schutzgas, eine z.B. 50 bis 90 Gew.-%ige Lösung von Aluminiumhydroxid in o-Phosphorsäure und separat davon eine Lösung von o-Borsäure in einem Alkanolamin herstellt, dann beide Lösungen unter Rühren bei z.B. 70 bis 95°C zusammengibt. Dann kann man gegebenenfalls noch z.B. 25 bis 50 Gew.-%ige wäßrige Alkalihydroxidlösung und/oder z.B. wäßrigen 20 bis 30 Gew.-%igen Ammoniak zugeben.

Die Mengen der verwendeten Materialien können sich dabei an der Formel (I) orientieren.

Wenn man ganz oder teilweise andere Metallhydroxide oder Metalloxide, -carbonate oder -acetate, andere mehrbasische Säuren oder Dehydratisierungsprodukte von mehrbasischen Säuren oder die entsprechenden Oxide oder andere Amine einsetzen will, so kann man entsprechend verfahren.

Nach der oben gegebenen Lehre zur Herstellung geeigneter Addukte von Aminen an saure Metallsalze erhält man im allgemeinen Klare, wäßrige Lösungen mit Feststoffgehalten zwischen z.B. 50 und 95 Gew.-%, vorzugsweise 55 bis 85 Gew.-%.

Für die Wasserentfernung aus der Lösung von Addukten von Aminen an sauren Metallsalze kann man z.B. Sprühtrockner, Ofentrockner, Walzentrockner oder Trockenschnecken einsetzen, die man bei Temperaturen bis zu 250°C und gegebenenfalls bei vermindertem Druck betreibt. Bevorzugte Temperaturen sind solche von Raumtemperatur bis 240°C, insbesondere solche von 90 bis 180°C.

Der nach der Wasserentfernung verbleibende Rückstand ist im allgemeinen glasartig und kann in technisch üblichen Mahlwerken zu Teilchen mit einem mittleren Durchmesser von 0,05 bis 25 mm zerkleinert werden. Vorzugsweise weisen die Teilchen nach der Zerkleinerung einen mittleren Durchmesser von 0,5 bis 15 mm auf.

Vor oder nach dem Trocknen können den Addukten von Aminen an saure Metallsalze gegebenenfalls massive, blähfähige und/oder aufgeblähte Füllstoffe zugesetzt werden. Vorzugsweise setzt man diese vor dem Trocknen zu. Als Füllstoffe kommen z.B. in Frage: Kieselsäuren, Titandioxide und Eisenoxide jeweils in pulvriger Form oder als wäßrige Sole, Gesteinsmehle, Perlit, Vermikulit, Talkum, Gips der verschiedensten Arten, Graphit, pulvrige Kohlen der verschiedensten Arten, Holzmehle, Stärke, pulvrige Cellulose, blähfähiger Graphit, Montmorrillonit, Kaolin, Ton, Asbest, pulvrige Titanate, Metallpulver, Kunststoffpulver und/oder pulvriges Dicyandiamid, Melamin und/oder Harnstoff und/oder Kondensationsprodukte, davon mit Formaldehyd. Gegebenenfalls kann man auch metallische oder mineralische Verstärkungsfasern zusetzen. Füll- und Verstärkungsstoffe können z.B. in Mengen von 0 bis 25, vorzugsweise 0 bis 50 Gew.-%, bezogen auf das Gesamtgewicht, zugesetzt werden.

In die nächste Stufe des erfindungsgemäßen Verfahrens kann man Teilchen aus einem einzelnen Ansatz zur Herstellung inklusive Trocknung von Aminaddukten von sauren Metallsalzen, aber auch Mischungen von Teilchen aus verschiedenen Ansätzen, auch solchen mit unterschiedlichen Rezepturen einsetzen. Gegebenenfalls kann man eine geeignete mittlere Teilchengröße der Teilchen durch Aussieben oder Windsichtung erhalten.

Die Bildung der Hohlperlen erfolgt durch Einwirkung einer Temperatur von 180 bis 350°C für 0,3 Sekunden bis 5 Minuten, vorzugsweise durch Einwirkung einer Temperatur von 250 bis 300°C für eine Zeitdauer von 10 Sekunden bis 3 Minuten. Relativ niedrige Temperaturen (z.B. solche von 180 bis 300°C) und relativ kürzere Einwirkungszeiten (z.B. solche von 0,3 Sekunden bis 3 Minuten) sind im allgemeinen vorteilhaft, wenn man relativ kleine Teilchen einsetzt (z.B. solche mit mittleren Durchmessern von 0,05 bis 5 mm). Beim Einsatz relativ großer Teilchen (z.B. solchen mit mittleren Durchmessern von 1 bis 25 mm) sind im allgemeinen relativ höhere Temperaturen (z.B. solche von 250 bis 350°C) und relativ längere Einwirkungszeiten vorteilhaft (z.B. solche von 30 Sekunden bis 5 Minuten).

Die zur Bildung der Hohlperlen erforderlichen Bedingungen können z.B. mittels Mikrowellen, Infrarotstrahlung, eines Heißgasstroms, einer Flamme, eines Wirbelbetts oder eines Umluftofens oder durch Hindurchlaufen lassen durch ein erhitztes Rohr realisiert werden.

Durch die oben angegebenen Bedingungen treiben die getrockneten und zerkleinerten Addukte von Aminen an saure Metallsalze auf und bilden Hohlperlen, d.h. innen hohle oder lockeren Schaum enthaltende kugelige bis länglich geformte Gebilde.

Überraschenderweise wurde festgestellt, daß so hergestellte Hohlperlen thermoplastische Eigenschaften haben und noch weiter expansionsfähig sind. Man erhält weitgehend farblose, wasserlösliche und besonders ausgeprägt thermoplastische Hohlperlen, wenn man sie bei relativ niedrigen Temperaturen und relativ kurzen Verweilzeiten herstellt. Bei höheren Temperaturen und/oder Verweilzeiten sinkt die Wasserlöslichkeit der Hohlperlen. Die optimalen Bedingungen für die Herstellung von Hohlperlen mit besonders guten Eigenschaften lassen sich, auch in Abhängigkeit von der Art und Größe der dazu eingesetzten Teilchen und von der Art des Erhitzungsprozesses durch routinemäßige Vorversuche leicht ermitteln.

Die so hergestellten Hohlperlen, die man auch als Schaumgranulate bezeichnen kann, sind gegebenenfalls wasserlöslich. Sie können jedoch lange gelagert werden, ohne ihre Fähigkeit zur Bildung von Formkörpern zu verlieren, wenn man Feuchtigkeit ausschließt.

Wird die Herstellung der Hohlperlen bei anderen als erfindungsgemäß anzuwendenden Bedingungen durchgeführt, so neigen sie zu Verfärbungen und Vernetzungen, gegebenenfalls unter weiterer Expansion und verlieren ihre Thermoplastizität und ihr Expansionsvermögen (siehe Vergleichsbeispiele). Sie können dann nicht mehr für die bindemittelfreie Herstellung von Formkörpern durch gegenseitiges Verschweißen verwendet werden, sondern höchstens noch als Zusatzstoff zu erfindungsgemäß hergestellten Hohlperlen.

Für die erfindungsgemäße Herstellung von Formkörpern kann man erfindungsgemäß hergestellte Hohlperlen einsetzen, die mittlere Durchmesser von beispielsweise 1 bis 50 mm, insbesondere 3 bis 12 mm aufweisen.

Die Form zur Herstellung der Formkörper kann offen oder vorzugsweise geschlossen, aber gasdurchlässig sein. Es kann sich um wiederverwendbare oder sog. verlorene Formen handeln. Die Formen können mit Trennfolien oder Trennschichten ausgestattet sein und sind vorzugsweise aus Metall oder Keramik hergestellt worden. Der Füllgrad der Formen kann z.B. bei 30 bis 100 Vol.-% liegen, vorzugsweise werden sie zu 75 bis 100 Vol.-% gefüllt.

Als Materialien für Trennfolien und Trennschichten kommen z.B. Metallfolien, beispielsweise Aluminiumfolien, Papiere, textile Gebilde aus cellulosischen oder anorganischen Fasern, Talkum, Aluminiumoxide, Aluminiumoxidhydrate, Glimmer, Stärken oder Zellulose in Frage. Man kann auch Graphit-enthaltende Lacke und textile Vliese oder Gewebe auf Zellulose- oder Glasbasis einsetzen.

Gegebenenfalls kann man in die Form zwischen die Hohlperlen auch Verstärkungsmaterialien einbringen, beispielsweise Metallgitter, Metallgewebe oder entsprechende textile Verstärkungsmaterialien.

Die Form wird dann, vorzugsweise möglichst schnell und vorzugsweise auf 350 bis 950°C erhitzt. Besonders bevorzugt sind Temperaturen im Bereich 400 bis 700°C. Hierzu kann man die Formen z.B. in einen vorgeheizten Ofen einbringen. Bei Stahlformen kann man auch Induktionsöfen verwenden. Die Dauer des Erhitzens auf die genannte Temperatur kann z.B. 1 bis 60 Minuten, vorzugsweise 3 bis 30 Minuten betragen. Hierbei stört die Anwesenheit von Luft im allgemeinen nicht. Trotzdem kann man gegebenenfalls unter Schutzgas arbeiten und so unerwünschte Oxidationsreaktionen mit Sicherheit ausschließen.

Bei der Herstellung der Formkörper expandieren die Hohlperlen bzw. Schaumgranalien, sie verschweißen miteinander und füllen Hohlräume im Inneren der Hohlperlen, innerhalb der Form und zwischen den einzelnen Perlen auf wobei ein feinporiger, im wesentlichen anorganischer Partikelschaum entsteht und die Form abgebildet wird. Die Farbe der fertigen Formkörper ist im allgemeinen dunkelbraun bis schwarz.

Heller gefärbte bis farblose Formkörper kann man erhalten, wenn man bei Temperaturen über 600°C Luft, vorzugsweise mit Sauerstoff angereicherte Luft zuführt. Dann werden Formkörper erhalten, die eine besonders große und gegebenenfalls aktive innere Oberfläche haben. Sie können dann z.B. als Katalysator, Trägermaterial für Katalysatoren, Austauscher und Absorbermaterialien verwendet werden.

Erfindungsgemäß hergestellte Formkörper haben Raumgewichte von beispielsweise 60 bis 700 g/l, vorzugsweise von 80 bis 300 g/l. Sie sind wasserunlöslich, aber hydrophil, können aber auch ölige Flüssigkeiten aufnehmen.

Erfindungsgemäß hergestellte Formteile können in Form von Granulaten oder sonstigen Zerkleinerungsprodukten verwendet werden. Sie können auch direkt in situ, z.B. in Hohlräumen von Ofenwandungen hergestellt oder als Formkörper eingesetzt werden, beispielsweise in Form von Flächengebilden, etwa als Isolierplatten. Erfindungsgemäße Formkörper haben den Charakter von keramischen Hartschäumen. Sie sind relativ spröde und lassen sich kleben, schleifen, sägen und mit spanabhebenden Verfahren bearbeiten.

Die erfindungsgemäßen Formkörper und/oder daraus erhaltene Granulate oder sonstige Zerkleinerungsprodukte können beispielsweise als phosphathaltige Bodenverbesserer oder Pflanzsubstrate, zur Herstellung von Pflanzenbehältern, zu Zwecken der thermischen und/oder akustischen Isolation und/oder Dämmung zur Herstellung von brandabweisenden Sandwich-Strukturen und Leichtbauelementen zur Hohlraumausfüllung, als Verpackungsmaterial, zur Stoßabsorption, als Filtermaterial, als Ionenaustauscher, Katalysatoren, Katalysatorträger, Trägermaterialien für Dünger, mikrobiologische Kulturen oder Wirkstoffe und als Adsorbentien für wäßrige und nicht-wäßrige Flüssigkeiten und Feststoffe verwendet werden.

Im Hinblick auf den eingangs geschilderter Stand der Technik ist es ausgesprochen überraschend, daß auf die erfindungsgemäße Weise weitgehend anorganische Schaumstoffe z.B. in Form von Isolationselementen, Formteilen oder Zerkleinerungsprodukten davon erhältlich sind, die diese überragenden Eigenschaften und Verwendungsmöglichkeiten aufweisen.

### Beispiel

Im folgenden angegebene Teile und Prozente beziehen sich auf das Gewicht, wenn nichts anderes vermerkt ist.

### Beispiel 1

a) 3045 Teile technische o-Phosphorsäure (85%ig) wurden mit 726 Teilen Wasser auf 80°C erhitzt. Dann wurden unter Rühren kontinuierlich innerhalb einer Stunde 686,5 Teile Aluminiumhydroxid zugesetzt, bei 95°C 45 Minuten lang nachgerührt und dann abgekühlt.
b) 1600 Teile Ethanolamin und 24 Teile Wasser wurden mit 742 Teilen technischer o-Borsäure bei 80°C verrührt, bis sich nach 30 Minuten eine klare Lösung gebildet hatte, dann wurde auf 40°C abgekühlt.
c) In die gemäß b) frisch hergestellte Lösung wurden kontinuierlich unter gutem Rühren im Laufe einer Stunde 4042 Teile der gemäß a) hergestellten Lösung eindosiert. Dann wurde noch 2 Stunden bei 90°C nachgerührt und dann noch 30 Minuten auf unter 40°C abgekühlt. Die erhaltene, farblose, klare, 75%ige Lösung mit einem pH-Wert von 6,4 wird im folgenden als Ausgangslösung A bezeichnet.

### Beispiel 2

500 Teile der gemäß Beispiel 1 hergestellten Ausgangslösung A wurden mit 78 Teilen 50%iger wäßriger Natronlauge bei 40°C zu einer klaren Lösung mit einem pH-Wert von 7,3 verrührt. Diese Lösung wird im folgenden als Ausgangslösung B bezeichnet.

### Beispiel 3

a) 183,2 g (3 Mol) Ethanolamin wurde mit 185,4 g (3 Mol) o-Borsäure bei 70°C in einem Rührtopf in eine klare Lösung überführt.
b) 173,3 g (1,5 Mol) 85%ige o-Phosphorsäure wurden bei 22°C in einem Rührtopf vorgelegt. Dann setzte man unter Rühren 212,5 g (3 Mol) 25%ige technische, wäßrige Ammoniaklösung zu, wobei die Innentemperatur unter 50°C gehalten wurde.
c) 519,8 (4,5 Mol) 85%ige technische o-Phosphorsäure wurden mit 156 g (2 Mol) Aluminiumhydroxid (Hydrargillit) bei 95°C zu einer nahezu klaren Phosphatlösung umgesetzt und dann auf 70°C abgekühlt.
d) In die bei 70°C gehaltene Phosphatlösung aus c) wurde unter gutem Rühren die 50°C warme Lösung aus b) gegeben, wobei eine gut rührbare, glasige Lösung entstand, die 30 Minuten bei 90°C gerührt wurde. Dann wurde auf unter 50°C abgekühlt, wobei eine bei Raumtemperatur fließfähige Lösung entstand.
e) Die gemäß d) frisch hergestellte Phosphatlösung wurde unter intensivem Rühren mit der Lösung aus a) bei 80 bis 90°C vermischt. Dann wurde noch 1 Stunde bei 80 bis 90°C nachgerührt und dann unter Rühren abkühlen gelassen. Man erhielt eine bei Raumtemperatur fließfähige, lagerstabile, weitgehend klare Lösung. Der Feststoffgehalt betrug 63 % der pH-Wert 6,3. Diese Lösung wird im folgenden als Ausgangslösung C bezeichnet.

### Beispiel 4

Es wurden 693 Teile 85%iger o-Phosphorsäure und 350 Teile Wasser mit 234 Teilen Aluminiumhydroxid bei 95°C zu einer Lösung umgesetzt. Sobald eine annähernd klare Lösung entstanden war, wurde unter Rühren auf Raumtemperatur abgekühlt. Separat davon wurden 186 Teile o-Phosphorsäure mit 50 Teilen Wasser und 367 Teilen Monoethanolamin bei 70°C umgesetzt. Man erhielt eine klare Lösung. Diese wurde bei 70°C vorgelegt und die Aluminiumphosphatlösung im Laufe von 30 Minuten unter intensiver Vermischung zudosiert. Es wurde noch 2 Stunden bei 95°C nachgerührt und dann eine klare Lösung erhalten, die einen pH-Wert von 7 aufwies. Die Lösung wird im folgenden als Ausgangslösung D bezeichnet.

### Beispiel 5

156 Teile Aluminiumhydroxid wurden bei 90°C in 693 Teilen 85%iger o-Phosphorsäure gelöst und dann nach 48 Stunden bei 40°C mit 230 Teilen 75%iger wäßriger Monoethanolaminlösung unter gutem Rühren umgesetzt. Man erhielt eine klare, viskose Lösung. Diese Lösung wird im folgenden als Ausgangslösung E bezeichnet.

### Beispiel 6

1385 Teile 85%iger technischen o-Phosphorsäure und 312 Teile Hydrargillith wurden 2 Stunden bei 100°C gerührt. Es entstand eine fast klare Lösung. Separat davon wurden 611 Teile Monoethanolamin mit 318 Teilen o-Borsäure bei 90°C unter Stickstoff bis zur Bildung einer klaren Lösung gerührt. Danach wurden 65,7 Teile der Aminsalzlösung bei 100°C intensiv mit 34,3 Teilen der Aluminiumphosphatlösung verrührt und 2 Stunden bei 90°C nachgerührt. Man erhielt so eine fast klare Lösung mit einem Feststoffgehalt von 95 % und einem pH-Wert von 7. Diese Lösung wird im folgenden als Ausgangslösung F bezeichnet.

### Beispiel 7

Die Ausgangslösungen A bis F wurden getrennt voneinander in einem Umluftschrank bei 120°C bis zur Gewichtskonstanz getrocknet. Danach wurde abgekühlt und das spröde, glasartige Material in einer Prallmühle zerkleinert. Abschließend wurde jeweils die Kornfraktion mit 1 bis 2 mm Korndurchmesser herausgesiebt. So wurden die Ausgangsgranulate A bis F erhalten.

### Beispiel 8

Die Ausgangsgranulate A bis F wurden so auf ein Aluminiumband aufgestreut, daß sich die einzelnen Teilchen nicht berührten. Dann wurde das beladene Band mit einer Verweilzeit von 150 Sekunden durch einen auf 275°C vorgeheizten Umluftofen geführt.

So wurden aus den Ausgangsgranulaten A bis F annähernd gleichartige, nahezu farblose bis schwach gelbliche Hohlperlen mit Durchmessern zwischen 3 und 6 mm erhalten. Die aus dem Borsäure-freien Ausgangsgranulat E erhaltenen Perlen waren etwas kleiner als die aus den anderen, borhaltigen Ausgangsgranulaten erhaltenen.

### Beispiel 9

Es wurde verfahren wie in Beispiel 8, jedoch wurde der Umluftofen bei 250°C betrieben. Es wurden nahezu farblose Hohlperlen mit mittlerem Korndurchmessern von 3 bis 5 mm erhalten.

### Beispiel 10

Es wurde verfahren wie in Beispiel 8, jedoch wurde der Umluftofen bei 300°C betrieben. Es wurden nahezu farblose Hohlperlen mit mittlerem Korndurchmessern von 5 bis 9 mm erhalten.

### Beispiel 11

Die gemäß den Beispielen 8 bis 10 erhaltenen Hohlperlen wurden mit einem Erdgas-Bunsenbrenner beflammt. Sie expandierten heftig unter erheblicher Volumenvergrößerung.

### Beispiel 12 (zum Vergleich)

Es wurde verfahren wie in Beispiel 8, jedoch wurde der Umluftofen bei 400°C betrieben. Es wurden braune Hohlperlen mit Korndurchmessern von 5 bis 11 mm erhalten. Das Beispiel zeigt, daß zu hohe Temperaturen zu großen Hohlperlen mit schlechten Eigenschaften führen (siehe auch Beispiel 14).

### Beispiel 13 (zum Vergleich)

Es wurde verfahren wie in Beispiel 8, jedoch wurde der Umluftofen bei 300°C betrieben und die Verweildauer betrug 400 Sekunden (= 6,7 Minuten). Es wurden braune Hohlperlen mit Korndurchmessern von 5 bis 10 mm erhalten. Dieses Beispiel zeigt, daß zu lange Verweilzeiten zu großen Hohlperlen mit schlechten Eigenschaften führen (siehe auch Beispiel 14).

### Beispiel 14 (zum Vergleich)

Die gemäß den Beispielen 12 und 13 erhaltenen Hohlperlen wurden mit einem Erdgas-Bunsenbrenner beflammt. Sie expandierten sehr wenig oder garnicht.

### Beispiel 15

Eine demontierbare Plattenform, bestehend aus zwei im Abstand von 5 cm parallel übereinander liegenden Stahlblechen und zwei seitlichen Abstandshaltern sowie seitlichen Verschlußstücken, wurde mit Papier ausgekleidet und mit den Schaumperlen erhalten nach den Beispielen 8 bis 10 unter leichtem Rütteln gefüllt. Dann wurde die Form liegend in einen auf 630°C vorgeheizten Umluftofen eingebracht, nach 30 Minuten dem Ofen wieder entnommen, im Laufe von 3 Stunden abgekühlt und die gebildete Schaumstoffplatte entnommen.

So wurden die Schaumstoffplatten A bis F erhalten, die fest und hart waren, die die Struktur eines Schaumes aus gut verschweißten Schaumperlen aufwiesen und die Plattenform voll ausfüllten. Die ehemaligen Hohlräume in und zwischen den eingesetzten Hohlperlen waren durch einen feinporigen Schaum ausgefüllt. Es war ein weitgehend homogener Schaumstoff entstanden.

Bei der Herstellung der Schaumstoffplatten war ein Gewichtsverlust von ca. 35 % eingetreten. Die Schaumstoffplatte A hatte ein Raumgewicht von 140 g/l, eine mittlere 50°C-Wärmedurchgangszahl von 0,1 W/mK und war nicht entzündbar.

Beim Auskleiden der Form mit Aluminiumfolie statt Papier wurden mit Aluminiumfolie kaschierte Schaumstoffplatten erhalten.

Beim Verwenden einer konischen Blumentopfform statt der Plattenform wurden bei analoger Arbeitsweise Pflanzgefäße erhalten.

### Beispiel 16 (zum Vergleich)

Es wurde wie bei Beispiel 15 gearbeitet, jedoch die Hohlperlen eingesetzt, die gemäß den Beispielen 12 und 13 erhalten worden waren. Man erhielt keine Platten aus fest verschweißtem Partikelschaumstoff, sondern nur bröselige Massen, die keinen Zusammenhalt hatten und im wesentlichen aus den unverbundenen Hohlperlen des Ausgangsmaterials bestanden.

### Beispiel 17

Die im Beispiel 15 beschriebene Plattenform wurde liegend zur Hälfte mit aus dem Ausgangsgranulat D gemäß Beispiel 8 hergestellten Hohlperlen gefüllt. Dann wurde ein grobmaschiges Gewebe aus Stahldraht (Maschenweite 10 x 10 mm) auf die Hohlperlenschicht gelegt und dann die Form vollständig mit Hohlperlen gefüllt. Wie in Beispiel 15 beschrieben wurde dann eine Partikelschaumplatte hergestellt. Die Platte enthielt mittig eine fest verankerte Stahlgewebeverstärkung. Derartige Platten sind als verstärkte, brandwidrige und besonders leichte Bau- und Konstruktionselemente einsetzbar.

### Beispiel 18

Eine gemäß Beispiel 15 hergestellte Platte aus durch eingeschlossenen Kohlenstoff schwarz gefärbtem Partikelschaum (erhalten aus Hohlperlen hergestellt gemäß Beispiel 8; Ausgangsgranulat A) wurde in einen Umluftofen gebracht und dort 3 Stunden auf 900°C erhitzt. Die Platte behielt ihre Ausgangsmaße, aber war nunmehr rein weiß. Derartige Platten können als solche oder in zerkleinerter Form im Raffineriebereich als oxidativ regenerierbarer Katalysator und als Filtermaterial verwendet werden.

### Beispiel 19

Ein aus einem Stahldrahtnetz geformtes Rohr mit einem Innendurchmesser von 6 cm und einer Maschenweite von 2 x 2 mm wurde mit gemäß Beispiel 7 aus dem Ausgangsgranulat B hergestellten Schaumperlen gefüllt, beidseitig mit Deckeln aus ebensolchem Drahtnetz verschlossen und in einen auf 400°C vorgeheizten Ofen eingebracht. Nach 30 Minuten wurde das mit einem fest verschweißten Partikelschaum gefüllte Rohr entnommen und abkühlen gelassen. Man erhielt so ein Stoßabsorptionselement, bei dem durch die Zertrümmerung des Partikelschaums beim Zusammenpressen durch den Stoß die Stoßenergie vernichtet wird.

## Patentansprüche

1. Verfahren zur Herstellung von Formteilen, dadurch gekennzeichnet, daß man
- zunächst eine wäßrige Lösung von Aminaddukten von sauren Metallsalzen herstellt,
- diese Lösung solange auf Temperaturen unter 250°C erhitzt, bis das entfernbare Wasser verdampft ist,
- den verbleibenden festen Rückstand zu Teilchen mit mittleren Durchmessern zwischen 0,05 und 25 mm zerkleinert,
- diese Teilchen für eine Zeitdauer von 0,3 Sekunden bis 5 Minuten einer Temperatur von 180 bis 350°C aussetzt, wobei die Teilchen aufgetrieben werden und Hohlperlen entstehen,
- diese Hohlperlen in eine Form einbringt und
- dort auf Temperaturen von 350 bis 1200°C erhitzt, wobei die Teilchen expandieren und miteinander thermisch verschweißen.

2. Verfahren nach Anspruch 1, dadurch gekennzeichnet, daß die Aminaddukte von sauren Metallsalzen der Formel (I) entsprechen
Al₁₋₃B₀₋₉P₃₋₇N₄₋₁₂M₀₋₉ · xH₂O (I),
in der
Al für eingesetztes Aluminiumhydroxid,
B für eingesetzte o-Borsäure,
P für eingesetzte o-Phosphorsäure,
N für eingesetztes Amin, insbesondere Monoethanolamin,
M für eingesetztes Alkalimetallhydroxid und
xH₂O das im anorganischen/organischen Komplex gebunden vorhandene Wasser bedeutet und x für 0 oder eine ganze Zahl von 1 bis 90 steht und
die Indices Molzahlen angeben.

3. Verfahren nach Ansprüchen 1 und 2, dadurch gekennzeichnet, daß die Aminaddukte von sauren Metallsalzen der summarischen Formel (II) entsprechen
Al₂₋₃B₃₋₉P_{5,5-6,5}N₆₋₉M₀₋₃ · xH₂O (II),
in der
die verwendeten Symbole die in Anspruch 2 angegebene Bedeutung haben und x für 0 oder eine ganze Zahl von 1 bis 36 steht.

4. Verfahren nach Ansprüchen 1 bis 3, dadurch gekennzeichnet, daß man Addukte von Aminen an saure Metallsalze herstellt, indem man bei 60 bis 100°C, eine 50 bis 90 Gew.-%ige Lösung von Aluminiumhydroxid in o-Phosphorsäure und separat davon eine Lösung von o-Borsäure in einem Alkanolamin herstellt, dann beide Lösungen unter Rühren bei 70 bis 95°C zusammengibt und für die Wasserentfernung aus der Lösung von Addukten von Aminen an sauren Metallsalze Sprühtrockner, Ofentrockner, Walzentrockner oder Trockenschnecken einsetzt, die man gegebenenfalls bei vermindertem Druck bei Temperaturen von Raumtemperatur bis 240°C betreibt.

5. Verfahren nach Ansprüchen 1 bis 4, dadurch gekennzeichnet, daß man vor oder nach dem Trocknen den Addukten von Aminen an saure Metallsalze massive, blähfähige und/oder aufgeblähte Füllstoffe in Mengen von 0 bis 25 Gew.-%, bezogen auf das Gesamtgewicht, zusetzt.

6. Verfahren nach Ansprüchen 1 bis 5, dadurch gekennzeichnet, daß man für die Herstellung der Formkörper Hohlperlen einsetzt, die mittlere Durchmesser von 1 bis 50 mm aufweisen und die Form zur Herstellung der Formkörper zu 30 bis 100 Vol.-% füllt.

7. Verfahren nach Ansprüchen 1 bis 6, dadurch gekennzeichnet, daß man in die Form zwischen die Hohlperlen Verstärkungsmaterialien einbringt.

8. Verfahren nach Ansprüchen 1 bis 7, dadurch gekennzeichnet, daß man die Hohlperlen in der Form auf 350 bis 950°C für 1 bis 60 Minuten erhitzt.

9. Verwendung von Formteilen hergestellt gemäß Anspruch 1 und daraus erhaltenen Zerkleinerungsprodukten als phosphathaltige Bodenverbesserer und Pflanzsubstrate, zur Herstellung von Pflanzenbehältern, zu Zwecken der thermischen und akustischen Isolation und Dämmung, zur Herstellung von brandabweisenden Sandwich-Strukturen und Leichtbauelementen zur Hohlraumausfüllung, als Verpackungsmaterial, zur Stoßabsorption, als Filtermaterial, als Ionenaustauscher, Katalysatoren, Katalysatorträger, Trägermaterialien für Dünger, mikrobiologische Kulturen und Wirkstoffe und als Adsorbentien für Flüssigkeiten und Feststoffe.
